(19) Europäisches Patentamt

European Patent Office

Office européen des brevets

(11) **EP 1 953 912 B1**

(12) **EUROPEAN PATENT SPECIFICATION**

(45) Date of publication and mention
of the grant of the patent:
**15.08.2018 Bulletin 2018/33**

(21) Application number: **08150840.0**

(22) Date of filing: **30.01.2008**

(51) Int Cl.:
*H02P 29/00* ⁽²⁰¹⁶·⁰¹⁾    *H02H 6/00* ⁽²⁰⁰⁶·⁰¹⁾
*H02H 7/085* ⁽²⁰⁰⁶·⁰¹⁾

(54) **Method for estimating a temperature of a coil of an electric motor**

Verfahren zur Bestimmung einer Spulentemperatur eines Elektromotors

Procédé d'évaluation de la température d'une bobine d'un moteur électrique

(84) Designated Contracting States:
**DE FR**

(30) Priority: **31.01.2007 JP 2007021082**

(43) Date of publication of application:
**06.08.2008 Bulletin 2008/32**

(73) Proprietor: **Mitsuba Corporation
Kiryu-shi,
Gunma 376-8555 (JP)**
Designated Contracting States:
**DE FR**

(72) Inventors:
• **Kimura, Takashi**
  **Gunma Gunma 376-8555 (JP)**
• **Okochi, Susumu**
  **Gunma Gunma 376-8555 (JP)**

(74) Representative: **Dennemeyer & Associates S.A.
Postfach 70 04 25
81304 München (DE)**

(56) References cited:
**EP-A1- 1 487 098      EP-A2- 1 460 521
EP-A2- 1 465 332      GB-A- 2 323 184
JP-A- 2003 003 740**

**Description**

TECHNICAL FIELD

The present invention relates to a method and device for estimating a temperature of a coil of an electric motor, in particular for actuating a closure member of a vehicle.

BACKGROUND OF THE INVENTION

A power window of a vehicle is typically configured to be operated in an auto mode where a window member continues its movement toward a fully closed position or fully open position once a switch is thrown temporarily to a position corresponding to the direction of the movement of the window panel as well as in a manual mode where a window member continues to move only during the time when a temporary switch is kept thrown to a position corresponding to the direction of the movement of the window panel. When the window panel is actuated in the auto mode, it is necessary to take an appropriate measure when the movement of the window panel is obstructed before reaching the fully open position or fully closed position because the electric motor for actuating the window panel may continue to be operated under an overload condition for a prolonged period of time and it could cause a permanent damage to the electric motor.

Such measures include the use of a circuit breaker to discontinue the supply of electric current to the electric motor once an overload condition is detected. Also, a sensor for measuring an electric current of a motor coil requires a resistance that is connected in series with the motor coil, and this causes an undesired power loss. Therefore, it is desirable to eliminate the need to actually measure the motor coil current.

Japanese patent laid open publication 2003-003740 discloses a method for monitoring the state of an electric motor in such forms as a time duration of motor operation, a rotational speed of the motor, and an electric current and voltage applied to the electric motor to estimate the ambient temperature so that the operation of the electric motor may be shut off or otherwise controlled in a prescribed manner without regard to changes in the ambient temperature when a window member actuated by the electric motor encounters an obstruction.

A simple circuit breaker lacks the accuracy that is required to achieve both a reliable protection of the electric motor and a prevention of false detection of an obstruction. Also, once the circuit breaker is activated, the electric motor becomes unable to operate until the circuit breaker is manually reset in an appropriate manner. The method proposed in the Japanese patent publication suffers from a lack of accuracy, and the required large margin of error could result in frequent occurrences of false detection of overload conditions.

In EP 1 465 332 A2, there is described a method for estimating a temperature of a coil of an electric motor according to the preamble of claim 1. EP 1 465 332 A2 discloses a method of controlling a DC motor wherein a thermal power dissipation is determined from a motor input and a motor velocity, a motor temperature is determined based on a thermal model using the thermal power dissipation, and in an adjusting action, and a usage of the motor is adjusted, taking the motor temperature into account.

In GB 2 323 184 A there is described a closure device including an electric motor provided with a motor coil according to the preamble of claim 8. GB 2 323 184 A discloses an electric motor which drives a setting member and a controlling method which comprises the step of determining a criterion for switching off or reversing the direction of the member subject to consideration of an operating parameter magnitude, such as motor speed, of the system, at least one ambient temperature of the system being also taken into consideration in determination of the criterion, in that the ambient temperature and/or a magnitude dependent thereon is or are detected and processed in a signal-processing arrangement.

It is against the background, and the limitations and problems associated therewith, that the present invention has been developed.

BRIEF SUMMARY OF THE INVENTION

In view of such problems of the prior art, a primary object of the present invention is to provide a method for estimating a temperature of a coil of an electric motor that can accurately estimate a coil temperature without requiring to measure the motor coil current.

A second object of the present invention is to provide a method for estimating a motor coil temperature that can eliminate the need for a circuit breaker for protecting the electric motor from an overload condition.

A third object of the present invention is to provide a method for estimating a motor coil temperature that can prohibit the operation of the electric motor under an overload condition and restore the operation of the electric motor as soon as the overload condition is resolved.

A fourth object of the present invention is to provide a device that incorporates a control unit configured to execute such a method.

A fifth object of the present invention is to provide a closure device that incorporates a control unit configured to execute such a method.

To achieve this, the method for estimating a temperature of a coil of an electric motor of the invention is characterized by the features claimed in the characterizing part of claim 1 and the invention provides a closure device according to the characterizing part of claim 8.

According to the present invention, such objects can be accomplished by providing method for estimating a temperature of a coil of an electric motor, characterized by the steps of: determining an initial value of each of a motor coil temperature, a temperature of a member adjacent to the motor coil and an ambient temperature of a surrounding part; determining an electric current conducted through the motor coil; computing an amount of heat generated in the motor coil from the determined electric current; computing a temperature of the motor coil at each current time point from a computed temperature thereof at a previous time point, and a computed amount of heat generated in the motor coil and an amount of internal heat transfer from the motor coil to the adjacent member during a time interval between the previous time point and current time point, the amount of internal heat transfer from the motor coil to the adjacent member during the said time interval being computed from a difference between a temperature of the adjacent member and the temperature of the motor coil at the previous time point, the temperature of the adjacent member at the current time point being computed from the temperature of the adjacent member at the previous time point, and an amount of external heat transfer from the adjacent member to the surrounding part and the amount of heat transfer from the motor coil to the adjacent member during the said time interval, the amount of external heat transfer during the said time interval being computed from a difference between the temperature of the adjacent member and the ambient temperature of the surrounding part at the previous time point.

Thus, the coil temperature of the electric motor can be estimated from the balance of heat in relation with the surrounding components. In particular, the amount of heat generated in the motor coil is proportional to the square of the electric current conducted through the motor coil. The electric current may be measured directly by using a current sensor, but it is also possible to compute the electric current from the voltage applied to the motor coil and the rotational speed of the motor which can be measured at less cost and at a higher accuracy. According to the present invention, because the heat transfer from the motor coil to the surrounding component parts is accounted for as well as the amount of heat generated in the motor coil, the motor coil temperature can be estimated accurately. The surrounding components may comprise a motor shaft, a commutator, a rotor core that may include a permanent magnet, a yoke rotatably supporting an end of the motor shaft and a combination thereof. The heat balance of the adjacent member is also accounted for. Because a large part of the heat transferred to the adjacent member is dissipated to the atmosphere, the accuracy of the temperature estimation can be improved by taking it into account.

The present invention further provides a closure device including an electric motor provided with a motor coil, a closure member configured to be actuated by the electric motor, a control unit for controlling operation of the electric motor and a current detector for measuring an electric current conducted through the motor coil, the closure member executing the foregoing method. In particular, the control unit is configured to limit the operation of the electric motor when the computed motor coil temperature has exceeded a prescribed threshold value. The device may further comprise a temperature sensor for detecting the ambient temperature.

According to a certain aspect of the present invention, the method further includes the step of limiting an operation of the electric motor when the estimated coil temperature exceeds a prescribed threshold value. Thereby, an effective motor protection can be achieved without requiring a circuit breaker which is not only costly but also inconvenient for the user because of the need to be manually reset after the problem has been resolved.

Preferably, the threshold value includes a first threshold value for entirely prohibiting the operation of the electric motor, a second threshold value lower than the first threshold value for prohibiting the operation of the electric motor except for a reversing movement thereof, and a third threshold value lower than the second threshold value for resuming operation of the electric motor which has been previously prohibited to operate. Thereby, the operation of the electric motor under an overload condition can be prohibited when required, and can be restored as soon as the overload condition is resolved so that the user can obtain the benefit of the use of the electric motor as much as possible without running the risk of causing damage to the electric motor.

BRIEF DESCRIPTION OF THE DRAWINGS

Now the present invention is described in the following with reference to the appended drawings, in which:

Figure 1 is a block diagram of the control unit of an automotive power window device embodying the present invention;
Figure 2 is a graph showing the actual electric current and computed electric current of the motor coil;
Figure 3 is a flowchart showing the control flow of the temperature computing circuit embodying the present invention; and

Figure 4 is a flowchart showing the control flow of the control circuit embodying the present invention.

DETAILED DESCRIPTION OF THE PREFERRED EMBODIMENTS

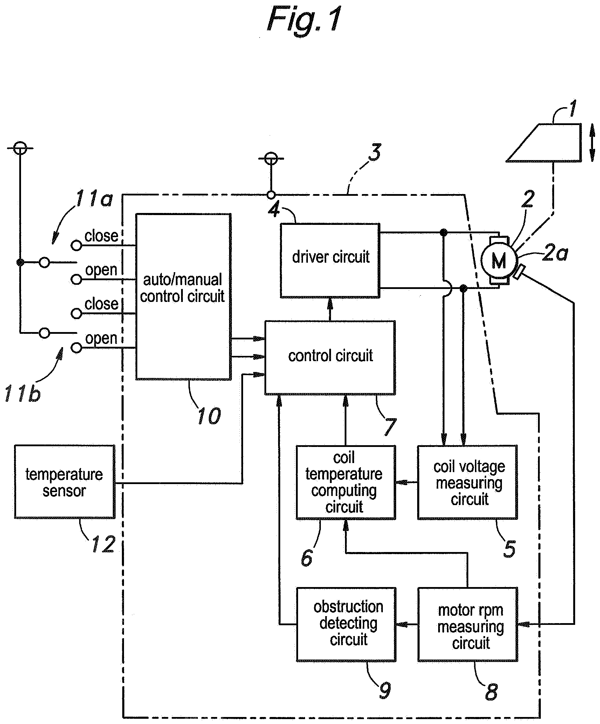

Referring to Figure 1, a window panel 1 is connected to a drive motor 2 so as to close and open an opening in a door panel of a vehicle not shown in the drawing. The electric motor 2 is controlled by a control unit 3 which includes a driver circuit 4 directly connected to the electric motor 2, a control circuit 7 for controlling the driver circuit 4, a coil voltage measuring circuit 5 for measuring a voltage applied to a coil 2a of the electric motor 2, a motor rotational speed measuring circuit 8 for measuring a rotational speed of the electric motor 2, a coil temperature computing circuit 6 for computing a temperature of the motor coil 2 according to outputs from the coil voltage measuring circuit 5 and motor rotational speed measuring circuit 8, an obstruction detecting circuit 9 for detecting the presence of an obstruction to the closing movement of the window panel 1 from an output of the motor rotational speed measuring circuit 8 and forwarding a detection result to the control circuit 7, and an auto/manual movement control circuit 10 connected to an auto/manual input switch 11a, 11b and configured to forward an auto/manual signal from the auto/manual input switch 11a, 11b to the control circuit 9.

The coil temperature computing circuit 6 computes the electric current conducted through the motor coil 2a from the electric voltage applied to the motor coil 2a and the motor rotational speed detected by the motor rotational speed measuring circuit 8, and computes the temperature of the motor coil 2a from the computed electric current, the temperatures of the adjacent member and the ambient temperature.

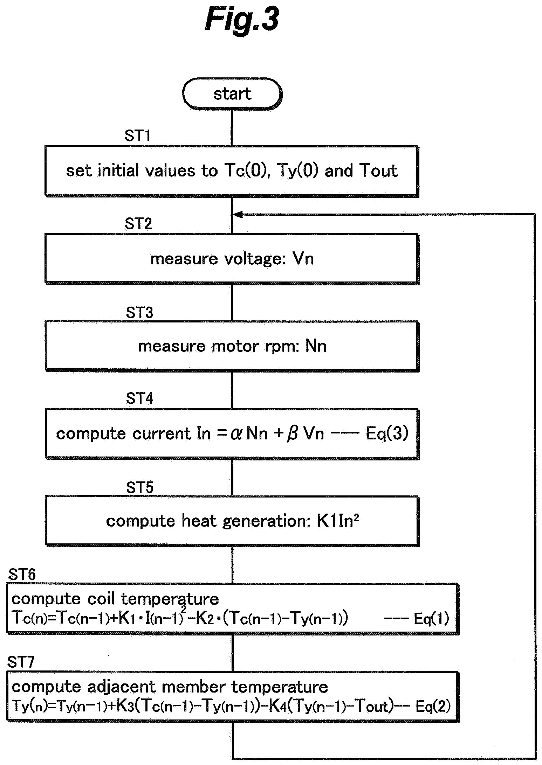

The process of estimating the coil temperature is given in the flowchart of Figure 3. The motor coil temperature may be given as a balance of the amount of heat generated in the motor coil which is proportional to the square of the electric current conducted through the motor coil, and the amount of internal heat transfer from the motor coil to the adjacent member which is proportional to the temperature difference between the motor coil and adjacent member. Thus, the coil temperature Tc may be computed from the equation given in the following:

$$Tc(n)=Tc(n-1)+K1 \cdot I(n-1)^2-K2 \cdot (Tc(n-1)-Ty(n-1))$$

$$--- (1)$$

where K1 and K2 are proportional constants, I is the electric current conducted through the coil 2a, Ty is the temperature of a member adjacent to the motor coil 2a, n denotes a certain time point, and (n-1) denotes a time point immediately preceding the certain time point n. The temperature of the motor coil can be computed from the amount of heat retained by the motor coil 2a by taking into account the heat capacity of the coil. The thermal resistance and heat capacity are accounted for by the constants K1 and K2. It should be noted that the computing process may be executed in continuous manner (as an analog process), but would be more likely to be executed in a discrete or stepwise manner (as a digital process) in real applications.

Assuming that the adjacent member is primarily exposed to the atmosphere and dissipates its heat primarily to the atmosphere, the temperature of the adjacent member can be computed from following Equation (2).

$$Ty(n)=Ty(n-1)+K3 \cdot (Tc(n-1)-Ty(n-1))-K4 \cdot (Ty(n-1)-Tout)$$
$$--- (2)$$

where K3 and K4 are proportional constants. By substituting the computed motor coil current computed by the control circuit 6 into Equations (1) and (2), the motor coil temperature Tc(n) can be obtained. If there are more than one adjacent member that are desired to be accounted for, Equation (2) may be extended in a corresponding manner.

The estimation of the motor coil temperature using the foregoing equations provides a far higher accuracy than the convention method which accounts for only the amount of heat generated in the motor coil. Owing to the higher accuracy in the estimation of the motor coil current, the present invention can permit the selection of threshold values for restricting the operation of the electric motor without excessive safety margins, and the electric motor is allowed to operate under a broader operating condition without running the risk of damaging the electric motor.

The electric current I conducted through the motor coil is determined by the voltage V applied to the motor coil and the rotational speed N of the electric motor as given in the following:

$$In = \alpha \times Nn + \beta \times Vn$$

--- (3)

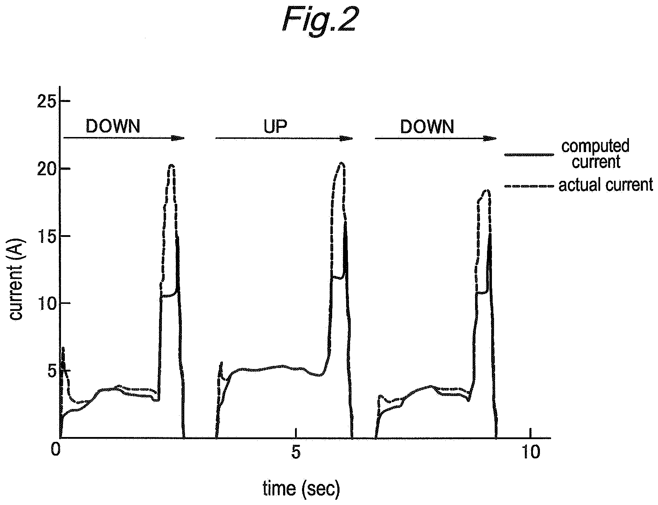

where $\alpha$ and $\beta$ are coefficients that are determined by the property of the electric motor. Figure 2 shows an actually measured motor coil current by using a current sensor and a computed motor coil current computed from Equation (3). It was thus verified that the motor coil current can be adequately accurately computed from the motor coil voltage and the rotational speed of the electric motor by selecting suitable coefficients $\alpha$ and $\beta$.

Referring to Figure 3, the control circuit 7 initially receives a coil temperature Tc and an adjacent member temperature Ty and an ambient temperature Tout in step ST1. The ambient temperature Tout may be an actually measured ambient temperature detected by a temperature sensor 12 provided on the exterior of the vehicle while the coil temperature Tc and adjacent member temperature Ty are initially given as the same temperature as the ambient temperature. It is also possible to set the ambient temperature Tout as a highest conceivable temperature such as 45 °C, instead of actually measuring it.

The control circuit 7 receives a coil voltage measured by the voltage measuring circuit 5 in step ST2, and a motor rotational speed from the motor rotational speed measuring circuit 8 in step ST3. In step ST4, the control circuit 7 computes the motor coil current from the coil voltage and motor rotational speed received in steps ST2 and ST3 according to Equation (3). The mount of heat generation is computed from the coil current in step ST5.

The coil temperature is then computed by using Equation (1) in step ST6. Equation (1) computes the temperature of the motor coil at each current time point from a computed temperature thereof at a previous time point, and a computed amount of heat generated in the motor coil and an amount of internal heat transfer from the motor coil to the adjacent member during a time interval between the previous time point and current time point.

In step ST7, the adjacent member temperature Ty is computed from Equation (2). Equation (2) computes the temperature of the adjacent member at the current time point from the temperature of the adjacent member at the previous time point, and an amount of external heat transfer from the adjacent member to the surrounding part and the amount of internal heat transfer from the motor coil to the adjacent member during the said time interval. The computed adjacent member temperature and motor coil temperature are used for computing the corresponding temperatures at the subsequent incremental time point.

Following step ST7, the program flow returns to step ST2 and repeats the steps of ST2 to ST5 at a prescribed interval.

The control circuit 7 is also configured to control the operation of the electric motor 2 via the driver circuit 4 according to the obstruction detection signal from the obstruction detecting circuit 9 and the coil temperature computed by the coil temperature computing circuit 6. The driver circuit 4 activates the electric motor 2 according to the auto/manual signal from the motor rotational speed measuring circuit 8 as well as according to the control signal from the control circuit 7.

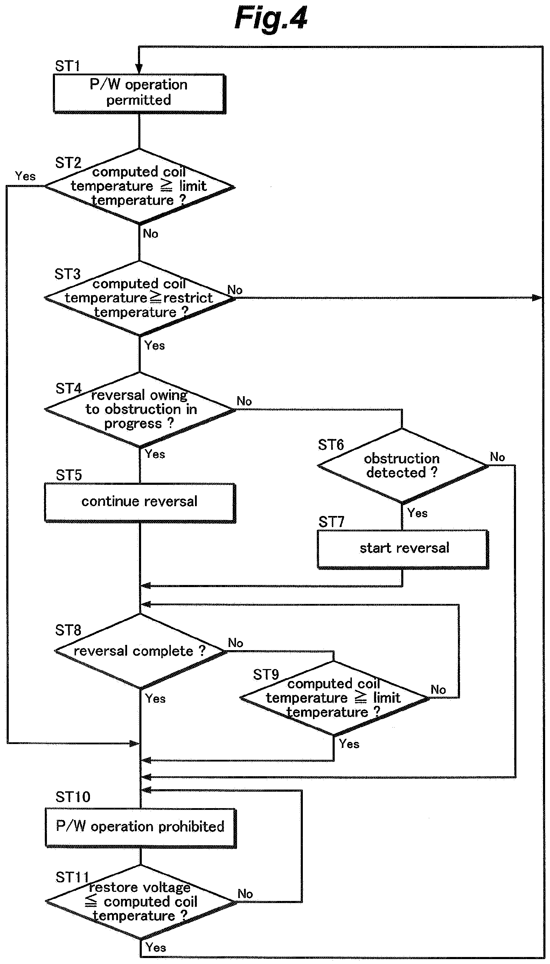

The control process of the control circuit 7 when opening and closing the window is now described in the following with reference to the flowchart of Figure 4. Three threshold temperatures are defined in advance, limit temperature, restrict temperature and restore temperature. The limit temperature is a temperature level that could burn the motor and must be avoided. The restrict temperature is lower than the limit temperature, and is selected such that the motor may be safely reversed upon detecting the restrict temperature before the temperature reaches the limit temperature. The restore temperature is lower than the restrict temperature, and is selected such that the automatic control may be continued without the coil temperature reaching the limit temperature.

This control process is enabled only when the power window is allowed to operate (step ST1). The computed coil temperature received from the coil temperature computing circuit 6 is compared with the limit temperature in step ST2. If the computed coil temperature is higher than the limit temperature, the process flow advances to step ST10, and prohibit any further operation of the power window to avoid the burning of the motor coil 2a. If the computed coil temperature is below the limit temperature, the process flow advances to step ST3.

The computed coil temperature is then compared with the restrict temperature in step ST3. If the coil temperature is lower than the restrict temperature, the program flow returns to step ST1 as there is no problem in operating the power window. If the coil temperature is higher than the restrict temperature, the program flow advances to step ST4 to permit only the reversing of the power window.

In step ST4, it is determined if the electric motor 2 is reversing from the state of the control circuit 4 in controlling the electric motor 2. If the electric motor 2 is reversing, the program flow advances to step ST5 to continue the reversing of the electric motor 2. If the electric motor 2 is not reversing, the program flow advances to step ST6 to determine if the window panel 1 is encountering an obstacle according to the output from the obstruction detecting circuit 9. If any obstruction such as an arm of a vehicle occupant is detected, the program flow advances to step ST7 to execute the reversing of the electric motor 2. If no obstruction is detected, the program flow advances to step ST10 to immediately terminate the activation of the electric motor 2. Following the continuation and starting of the reversing of the electric motor in steps ST5 and ST7, the program flow advances to step ST8.

In step ST8, it is determined if the reversing of the electric motor ST8 has been completed. The completion of the reversing of the electric motor ST8 may not necessarily coincide with the fully open or fully closed position of the window panel 1 but may also consist of a prescribed travel of the window panel 1. When the reversing of the electric motor 2 is determined to be complete, the program flow advances to step ST10 and prohibits any further operation of the electric motor 2. If the reversing of the electric motor 2 is not complete, the program flow advances to step ST9.

In step ST9, it is determined if the motor coil temperature during the reversing of the electric motor 2 has exceeded the limit temperature. More specifically, the computed motor coil temperature is compared with the limit temperature, and the program flow advances to step ST8 while maintaining the reversing movement if the computed coil temperature is lower than the limit temperature, and to step ST10 to terminate the reversing movement of the electric motor 2 and prevent the burning of the motor coil if the computed coil temperature is equal to or higher than the limit temperature.

The operation of the power window is prohibited in step ST10, and the program flow advances to step ST11 where the computed coil temperature is compared with the restore temperature. If the computed coil temperature is equal to or lower than the restore temperature, the program returns to step ST1 and releases all the restrictions on the operation of the electric motor 2. If the computed coil temperature is still higher than the restore temperature, the program flow returns to step ST10 to maintain the prohibited state of the motor operation.

According to the arrangement of the illustrated embodiment, the electric current conducted through the motor coil is computed from the voltage applied to the motor coil and rotational speed of the electric motor, and the motor coil temperature is computed from the amount of heat generated in the motor coil from the computed electric current and the amount of internal heat transfer from the motor coil to the adjacent member. In the illustrated embodiment, because the amount of heat transferred to the adjacent member is taken into account, the coil temperature can be estimated at a higher precision than was possible with the previous arrangement which took into account only the amount of heat generated in the motor coil. Also, because the electric current was computed from the voltage applied to the motor coil and the rotational speed of the electric motor, the need for a current sensor can be eliminated, and a more compact and less expensive structure is possible.

By comparing the computed motor coil temperature with two or more threshold values, it becomes possible to select from a limit operation mode where the operation of the electric motor is entirely prohibited and a restrict operation where the operation of the electric motor is prohibited except for the reversing of the electric motor which tends to resolve the overload condition of the electric motor. In particular, when this electric motor is used for activating a closure member of a vehicle, the closure member may be enabled to be reversed when the closure member encounters an obstruction so as to prevent an overload condition of the electric motor from persisting for a prolonged period of time by invoking the restrict operation mode (for reversing the electric motor), instead of the limit operation mode where the entire operation, including the reversing movement, is prohibited. The limit operation mode is invoked when a permanent damage to the motor coil is anticipated. Also, by automatically permitting the operation of the electric motor once the motor coil temperature has dropped below a restore threshold temperature level which is defined as a safe motor coil temperature, it is possible to resume the operation of the electric motor as soon as the condition of the electric motor is brought back to the normal condition. Thereby, the motor is enabled to operate under a broadest possible range of operating condition thereof without running the risk of damaging the electric motor.

In Equations (1) and (2), only one adjacent member was considered, but it is also possible to consider two or more adjacent members. The heat generated in the motor coil is transferred from one adjacent member to another. If there are "m" such adjacent members, the motor coil temperature can be given by the following equation:

$$T_c(n)=T_c(n-1)+K_1 \cdot I(n-1)^2-K_2 \cdot (T_c(n-1)-T_{y1}(n-1))$$
$$T_{y1}(n)=T_{y1}(n-1)+K_3 \cdot (T_c(n-1)-T_{y1}(n-1)-K_4 \cdot (T_{y1}(n-1)-T_{y2}(n-1))$$
$$T_{y2}(n)=T_{y2}(n-1)+K_5(T_{y1}(n-1)-T_{y2}(n-1))-K_6(T_{y2}(n-1)-T_{y3}(n-1))$$
$$\vdots$$
$$T_{ym}(n)=T_{ym}(n-1)+K_{2m+1}(T_{y(m+1)}(n-1)-T_{ym}(n-1))-K_{2(m+1)}(T_{ym}(n-1)-T_{out})$$

$$------ (4)$$

Here, it is assumed that the heat transfers from one adjacent member to another in series. The actual geometry may be much more complex, but this model should provide an adequate accuracy.

Although the present invention has been described in terms of preferred embodiments thereof, it is obvious to a person skilled in the art that various alterations and modifications are possible without departing from the scope of the present invention which is set forth in the appended claims.

## Claims

1. A method for estimating a temperature of a coil (2a) of an electric motor (2), comprising the steps of:

   determining an initial value of each of a motor coil temperature, a temperature of a member adjacent to the motor coil and an ambient temperature of a surrounding part;
   determining an electric current conducted through the motor coil;
   computing an amount of heat generated in the motor coil from the determined electric current; and
   computing a temperature of the motor coil at each current time point from a computed temperature thereof at a previous time point, and a computed amount of heat generated in the motor coil and an amount of internal heat transfer from the motor coil to the adjacent member during a time interval between the previous time point and current time point,
   the amount of internal heat transfer from the motor coil to the adjacent member during the said time interval being computed from a difference between a temperature of the adjacent member and the temperature of the motor coil at the previous time point,
   the temperature of the adjacent member at the current time point being computed from the temperature of the adjacent member at the previous time point, and an amount of external heat transfer from the adjacent member to the surrounding part and the amount of heat transfer from the motor coil to the adjacent member during the said time interval,
   the amount of external heat transfer during the said time interval being computed from a difference between the temperature of the adjacent member and the ambient temperature of the surrounding part at the previous time point,
   **characterized in** further comprising the step of limiting an operation of the electric motor when the estimated coil temperature exceeds a prescribed threshold value, and
   **in that** the threshold value includes a first threshold value for entirely prohibiting the operation of the electric motor, a second threshold value lower than the first threshold value for prohibiting the operation of the electric motor except for a reversing movement thereof, and a third threshold value lower than the second threshold value for resuming operation of the electric motor which has been previously prohibited to operate.

2. The method according to claim 1, wherein the determining an electric current conducted through the motor coil comprises the steps of:

   measuring a voltage applied across the motor coil;
   measuring a rotational speed of the electric motor; and
   computing an electric current conducted through the motor coil from the measured voltage and rotational speed.

3. The method according to claim 1, wherein the adjacent member consists of a member selected from a group including a motor shaft, a commutator, a rotor core that may include a permanent magnet, a yoke rotatably supporting an end of the motor shaft and a combination thereof.

4. The method according to claim 1, wherein the surrounding part consists of the atmosphere.

5. The method according to claim 1, wherein the electric motor consists of an electric motor for actuating a closure member of a vehicle.

6. The method according to claim 1, wherein the ambient temperature of the surrounding part is given as an actually measured temperature.

7. The method according to claim 1, wherein the ambient temperature of the surrounding part is given as a fixed temperature.

8. A closure device including an electric motor (2) provided with a motor coil (2a), a closure member (1) configured to be actuated by the electric motor, a control unit (3) for controlling operation of the electric motor and a current detector (6) for measuring an electric current conducted through the motor coil,
**characterized in that**:

the control unit is configured to execute the steps of:

determining an initial value of each of a motor coil temperature, a temperature of a member adjacent to the motor coil and an ambient temperature of a surrounding part;
determining an electric current conducted through the motor coil;
computing an amount of heat generated in the motor coil from the determined electric current; computing a temperature of the motor coil at each current time point from a computed temperature thereof at a previous time point, and a computed amount of heat generated in the motor coil and an amount of internal heat transfer from the motor coil to the adjacent member during a time interval between the previous time point and current time point,
the amount of internal heat transfer from the motor coil to the adjacent member during the said time interval being computed from a difference between a temperature of the adjacent member and the temperature of the motor coil at the previous time point,
the temperature of the adjacent member at the current time point being computed from the temperature of the adjacent member at the previous time point, and an amount of external heat transfer from the adjacent member to the surrounding part and the amount of heat transfer from the motor coil to the adjacent member during the said time interval,
the amount of external heat transfer during the said time interval being computed from a difference between the temperature of the adjacent member and the ambient temperature of the surrounding part at the previous time point; and
limiting the operation of the electric motor when the computed motor coil temperature has exceeded a prescribed threshold value,

wherein the threshold value includes a first threshold value for entirely prohibiting the operation of the electric motor, a second threshold value lower than the first threshold value for prohibiting the operation of the electric motor except for a reversing movement thereof, and a third threshold value lower than the second threshold value for resuming operation of the electric motor which has been previously prohibited to operate.

**9.** The device according to claim 8 , wherein the control unit further comprises a voltage detector (5) for detecting a voltage applied across the motor coil, a rotational speed detector (8) for detecting a rotational speed of the electric motor, and a coil temperature computing circuit (6) for computing the electric current conducted through the motor coil from outputs of the voltage detector and rotational speed detector.

**10.** The device according to claim 8, further comprising a temperature sensor (12) for detecting the ambient temperature.

**Patentansprüche**

**1.** Verfahren zur Bestimmung einer Temperatur einer Spule (2a) eines Elektromotors (2), umfassend die Schritte:

Ermitteln eines Anfangswerts jeder aus einer Motorspulentemperatur, einer Temperatur eines der Motorspule benachbarten Elements und einer Umgebungstemperatur eines umgebenden Teils;
Ermitteln eines durch die Motorspule geleiteten Stroms;
Berechnen einer Wärmemenge, die in der Motorspule aus dem ermittelten Strom erzeugt wird; und Berechnen einer Temperatur der Motorspule zu jedem aktuellen Zeitpunkt aus einer berechneten Temperatur davon zu einem vorhergehenden Zeitpunkt und einer berechneten Wärmemenge, die in der Motorspule erzeugt wird, und einer Menge an interner Wärmeübertragung von der Motorspule zum benachbarten Element während eines Zeitintervalls zwischen dem vorhergehenden Zeitpunkt und dem aktuellen Zeitpunkt,
wobei die Menge an interner Wärmeübertragung von der Motorspule zum benachbarten Element während des Zeitintervalls berechnet wird aus einer Differenz zwischen einer Temperatur des benachbarten Elements und der Temperatur der Motorspule zum vorhergehenden Zeitpunkt,
wobei die Temperatur des benachbarten Elements zum aktuellen Zeitpunkt berechnet wird aus der Temperatur des benachbarten Elements zum vorhergehenden Zeitpunkt und einer Menge einer externen Wärmeübertragung vom benachbarten Element zum umgebenden Teil und der Menge der Wärmeübertragung von der Motorspule zum benachbarten Element während des Zeitintervalls,
wobei die Menge an externer Wärmeübertragung während des Zeitintervalls aus einer Differenz zwischen der Temperatur des benachbarten Elements und der Umgebungstemperatur des umgebenden Teils zum vorhergehenden Zeitpunkt berechnet wird,
**dadurch gekennzeichnet, dass** es ferner den Schritt des Begrenzens eines Betriebs des Elektromotors umfasst, wenn die bestimmte Spulentemperatur einen vorgegebenen Schwellenwert überschreitet, und dadurch, dass der Schwellenwert einen ersten Schwellenwert zum vollständigen Unterbinden des Betriebs des Elektromotors, einen zweiten Schwellenwert, der niedriger als der erste Schwellenwert ist, zum Unterbinden des Betriebs des Elektromotors mit Ausnahme einer Umkehrbewegung davon, und einen dritten Schwellenwert umfasst, der niedriger als der zweite Schwellenwert ist, zum Wiederaufnehmen des Betriebs des Elektromotors, dessen Betrieb zuvor unterbunden wurde.

2. Verfahren nach Anspruch 1, wobei das Ermitteln eines durch die Motorspule geleiteten Stroms die Schritte umfasst:

   Messen einer an der Motorspule angelegten Spannung;
   Messen einer Drehzahl des Elektromotors; und
   Berechnen eines Stroms, der aufgrund der gemessenen Spannung und Drehzahl durch die Motorspule geleitet wird.

3. Verfahren nach Anspruch 1, wobei das benachbarte Element aus einem Element besteht, das aus einer Gruppe ausgewählt ist, die eine Motorwelle, einen Kommutator, einen Rotorkern, der einen Permanentmagneten umfassen kann, ein Joch, in dem ein Ende der Motorwelle drehbar gelagert ist, und eine Kombination davon umfasst.

4. Verfahren nach Anspruch 1, wobei der umgebende Teil aus der Atmosphäre besteht.

5. Verfahren nach Anspruch 1, wobei der Elektromotor aus einem Elektromotor zum Betätigen eines Schließelements eines Fahrzeugs besteht.

6. Verfahren nach Anspruch 1, wobei die Umgebungstemperatur des umgebenden Teils als tatsächlich gemessene Temperatur angegeben wird.

7. Verfahren nach Anspruch 1, wobei die Umgebungstemperatur des umgebenden Teils als feste Temperatur angegeben wird.

8. Verschlussvorrichtung, die einen Elektromotor (2) umfasst, der mit einer Motorspule (2a), einem Schließelement (1), das eingerichtet ist, um durch den Elektromotor betätigt zu werden, einer Steuereinheit (3) zum Steuern des Betriebs des Elektromotors und einer Strommessvorrichtung (6) zum Messen eines durch die Motorspule geleiteten Stroms versehen ist,
   **dadurch gekennzeichnet, dass**:

   die Steuereinheit eingerichtet ist, um die Schritte auszuführen:

      Ermitteln eines Anfangswerts jeder aus einer Motorspulentemperatur, einer Temperatur eines der Motorspule benachbarten Elements und einer Umgebungstemperatur eines umgebenden Teils;
      Ermitteln eines durch die Motorspule geleiteten Stroms;
      Berechnen einer Wärmemenge, die in der Motorspule aus dem ermittelten Strom erzeugt wird; Berechnen einer Temperatur der Motorspule zu jedem aktuellen Zeitpunkt aus einer berechneten Temperatur zu einem vorhergehenden Zeitpunkt und einer berechneten Wärmemenge, die in der Motorspule erzeugt wird, und einer Menge an interner Wärmeübertragung von der Motorspule zum benachbarten Element während eines Zeitintervalls zwischen dem vorhergehenden Zeitpunkt und dem aktuellen Zeitpunkt,
      wobei die Menge an interner Wärmeübertragung von der Motorspule zum benachbarten Element während des Zeitintervalls berechnet wird aus einer Differenz zwischen einer Temperatur des benachbarten Elements und der Temperatur der Motorspule zum vorhergehenden Zeitpunkt,
      wobei die Temperatur des benachbarten Elements zum aktuellen Zeitpunkt berechnet wird aus der Temperatur des benachbarten Elements zum vorhergehenden Zeitpunkt und einer Menge einer externen Wärmeübertragung vom benachbarten Element zum umgebenden Teil und der Menge der Wärmeübertragung von der Motorspule zum benachbarten Element während des Zeitintervalls,
      wobei die Menge an externer Wärmeübertragung während des Zeitintervalls aus einer Differenz zwischen der Temperatur des benachbarten Elements und der Umgebungstemperatur des umgebenden Teils zum vorhergehenden Zeitpunkt berechnet wird; und

Begrenzen des Betriebs des Elektromotors, wenn die berechnete Motorspulentemperatur einen vorgegebenen Schwellenwert überschritten hat,

wobei der Schwellenwert einen ersten Schwellenwert zum vollständigen Unterbinden des Betriebs des Elektromotors, einen zweiten Schwellenwert, der niedriger als der erste Schwellenwert ist, zum Unterbinden des Betriebs des Elektromotors mit Ausnahme einer Umkehrbewegung davon, und einen dritten Schwellenwert umfasst, der niedriger als der zweite Schwellenwert ist, zum Wiederaufnehmen des Betriebs des Elektromotors, dessen Betrieb zuvor unterbunden wurde.

9. Vorrichtung nach Anspruch 8, wobei die Steuereinheit ferner eine Spannungsmessvorrichtung (5) zum Erfassen einer an der Motorspule angelegten Spannung, eine Drehzahlmessvorrichtung (8) zum Erfassen einer Drehzahl des Elektromotors und eine Spulentemperaturberechnungsschaltung (6) umfasst, um aus Ausgangssignalen der Spannungsmessvorrichtung und der Drehzahlmessvorrichtung den durch die Motorspule geleiteten Strom zu berechnen.

10. Vorrichtung nach Anspruch 8, ferner umfassend einen Temperatursensor (12) zum Erfassen der Umgebungstemperatur.

**Revendications**

1. Procédé d'évaluation de la température d'une bobine (2a) d'un moteur électrique (2), comprenant les étapes consistant à :

déterminer une valeur initiale de chacune d'une température de la bobine du moteur, d'une température d'un élément adjacent à la bobine du moteur et d'une température ambiante d'une partie environnante ;
déterminer un courant électrique guidé à travers la bobine du moteur ;
calculer une quantité de chaleur générée dans la bobine du moteur à partir du courant électrique déterminé ; et calculer une température de la bobine du moteur à chaque moment temporel actuel à partir de sa température calculée à un moment temporel précédent et d'une quantité de chaleur calculée générée dans la bobine du moteur et d'une quantité de transfert de chaleur interne de la bobine du moteur vers l'élément adjacent pendant un intervalle de temps entre le moment temporel précédent et le moment temporel actuel,
la quantité de transfert de chaleur interne de la bobine du moteur vers l'élément adjacent pendant ledit intervalle de temps étant calculée à partir d'une différence entre une température de l'élément adjacent et la température de la bobine du moteur au moment temporel précédent,
la température de l'élément adjacent au moment temporel actuel étant calculée à partir de la température de l'élément adjacent au moment temporel précédent et d'une quantité de transfert de chaleur externe de l'élément adjacent vers la partie environnante et de la quantité de transfert de chaleur de la bobine du moteur vers l'élément adjacent pendant ledit intervalle de temps,
la quantité de transfert de chaleur externe pendant ledit intervalle de temps étant calculée à partir d'une différence entre la température de l'élément adjacent et la température ambiante de la partie environnante au moment temporel précédent,
**caractérisé en ce qu'**il comprend en outre l'étape consistant à limiter un fonctionnement du moteur électrique lorsque la température évaluée de la bobine dépasse une valeur de seuil prescrite et **en ce que** la valeur de seuil comprend une première valeur de seuil pour interdire complètement le fonctionnement du moteur électrique, une deuxième valeur de seuil inférieure à la première valeur de seuil pour interdire le fonctionnement du moteur électrique à l'exception d'un mouvement d'inversion de celui-ci et une troisième valeur de seuil inférieure à la deuxième valeur de seuil pour reprendre le fonctionnement du moteur électrique dont le fonctionnement a été précédemment interdit.

2. Procédé selon la revendication 1, dans lequel la détermination d'un courant électrique guidé à travers la bobine du moteur comprend les étapes consistant à :

mesurer une tension appliquée aux bornes de la bobine du moteur ;
mesurer une vitesse de rotation du moteur électrique ; et
calculer un courant électrique guidé à travers la bobine du moteur à partir de la tension et de la vitesse de rotation mesurées.

3. Procédé selon la revendication 1, dans lequel l'élément adjacent est constitué d'un élément choisi dans un groupe comprenant un arbre moteur, un collecteur, un noyau de rotor pouvant comporter un aimant permanent, une culasse supportant de manière rotative une extrémité de l'arbre moteur et une combinaison de ceux-ci.

4. Procédé selon la revendication 1, dans lequel la partie environnante est constituée de l'atmosphère.

5. Procédé selon la revendication 1, dans lequel le moteur électrique est constitué d'un moteur électrique pour actionner un élément de fermeture d'un véhicule.

6. Procédé selon la revendication 1, dans lequel la température ambiante de la partie environnante est donnée comme une température réellement mesurée.

7. Procédé selon la revendication 1, dans lequel la température ambiante de la partie environnante est donnée comme une température fixe.

8. Dispositif de fermeture comprenant un moteur électrique (2) pourvu d'une bobine de moteur (2a), un élément de fermeture (1) conçu pour être actionné par le moteur électrique, une unité de commande (3) pour commander le fonctionnement du moteur électrique et un détecteur de courant (6) pour mesurer un courant électrique guidé à travers la bobine du moteur,
**caractérisé en ce que** :
l'unité de commande est conçue pour exécuter les étapes consistant à :

déterminer une valeur initiale de chacune d'une température de la bobine du moteur, d'une température d'un élément adjacent à la bobine du moteur et d'une température ambiante d'une partie environnante ;
déterminer un courant électrique guidé à travers la bobine du moteur ;
calculer une quantité de chaleur générée dans la bobine du moteur à partir du courant électrique déterminé ;
calculer une température de la bobine du moteur à chaque moment temporel actuel à partir de sa température calculée à un moment temporel précédent et d'une quantité calculée de chaleur générée dans la bobine du moteur et d'une quantité de transfert de chaleur interne de la bobine du moteur vers l'élément adjacent pendant un intervalle de temps entre le moment temporel précédent et le moment temporel actuel,
la quantité de transfert de chaleur interne de la bobine du moteur vers l'élément adjacent pendant ledit intervalle de temps étant calculée à partir d'une différence entre une température de l'élément adjacent et la température de la bobine du moteur au moment temporel précédent,
la température de l'élément adjacent au moment temporel actuel étant calculée à partir de la température de l'élément adjacent au moment temporel précédent et d'une quantité de transfert de chaleur externe de l'élément adjacent vers la partie environnante et de la quantité de transfert de chaleur de la bobine du moteur vers l'élément adjacent pendant ledit intervalle de temps,
la quantité de transfert de chaleur externe pendant ledit intervalle de temps étant calculée à partir d'une différence entre la température de l'élément adjacent et la température ambiante de la partie environnante au moment temporel précédent ; et limiter le fonctionnement du moteur électrique lorsque la température calculée de la bobine du moteur a dépassé une valeur de seuil prescrite,
dans lequel la valeur de seuil comprend une première valeur de seuil pour interdire complètement le fonctionnement du moteur électrique, une deuxième valeur de seuil inférieure à la première valeur de seuil pour interdire le fonctionnement du moteur électrique à l'exception d'un mouvement d'inversion de celui-ci et une troisième valeur de seuil inférieure à la deuxième valeur de seuil pour reprendre le fonctionnement du moteur électrique dont le fonctionnement a été précédemment interdit.

9. Dispositif selon la revendication 8, dans lequel l'unité de commande comprend en outre un détecteur de tension (5) pour détecter une tension appliquée aux bornes de la bobine du moteur, un détecteur de vitesse de rotation (8) pour détecter une vitesse de rotation du moteur électrique et un circuit de calcul de température de la bobine (6) pour calculer le courant électrique guidé à travers la bobine du moteur à partir des sorties du détecteur de tension et du détecteur de vitesse de rotation.

10. Dispositif selon la revendication 8, comprenant en outre un capteur de température (12) pour détecter la température ambiante.

# Fig.1

## *Fig.2*

## *Fig.3*

start

ST1
set initial values to Tc(0), Ty(0) and Tout

ST2
measure voltage: Vn

ST3
measure motor rpm: Nn

ST4
compute current $In = \alpha\,Nn + \beta\,Vn$ —— Eq(3)

ST5
compute heat generation: $K1\,In^2$

ST6
compute coil temperature
$Tc(n)=Tc(n-1)+K1 \cdot I(n-1)^2-K2 \cdot (Tc(n-1)-Ty(n-1))$     —— Eq(1)

ST7
compute adjacent member temperature
$Ty(n)=Ty(n-1)+K3(Tc(n-1)-Ty(n-1))-K4(Ty(n-1)-Tout)$— Eq(2)

# *Fig.4*

ST1
P/W operation permitted

ST2 computed coil temperature ≧ limit temperature ?
Yes
No

ST3 computed coil temperature ≧ restrict temperature ?
No
Yes

ST4 reversal owing to obstruction in progress ?
No
Yes

ST6 obstruction detected ?
No
Yes

ST5 continue reversal

ST7 start reversal

ST8 reversal complete ?
No
Yes

ST9 computed coil temperature ≧ limit temperature ?
No
Yes

ST10 P/W operation prohibited

ST11 restore voltage ≦ computed coil temperature ?
No
Yes

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003003740 A
- EP 1465332 A2
- GB 2323184 A